(19) Europäisches Patentamt / European Patent Office / Office européen des brevets

(11) **EP 2 652 758 B1**

(12) **EUROPEAN PATENT SPECIFICATION**

(45) Date of publication and mention
of the grant of the patent:
**21.03.2018 Bulletin 2018/12**

(21) Application number: **11820816.4**

(22) Date of filing: **15.12.2011**

(51) Int Cl.:
***H01G 9/20*** (2006.01)

(86) International application number:
**PCT/IT2011/000405**

(87) International publication number:
**WO 2012/081046 (21.06.2012 Gazette 2012/25)**

(54) **DSSC PHOTOVOLTAIC DEVICE COMPRISING PHOTOELECTROCHEMICAL CELLS AND PROVIDED WITH BYPASS MEANS AND UV FILTER**

PHOTOVOLTAISCHE DSSC-VORRICHTUNG MIT PHOTOELEKTROCHEMISCHEN ZELLEN MIT EINEM UMLEITUNGSMITTEL UND EINEM UV-FILTER

DISPOSITIF PHOTOVOLTAÏQUE À DSSC COMPRENANT DES CELLULES PHOTO-ÉLECTROCHIMIQUES ET MUNI DE MOYENS DE DÉRIVATION ET D'UN FILTRE À UV

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2010 IT RM20100662**

(43) Date of publication of application:
**23.10.2013 Bulletin 2013/43**

(73) Proprietor: **Permasteelisa S.p.A. a socio unico 31029 Vittorio Veneto (TV) (IT)**

(72) Inventors:
• **LANUTI, Alessandro I-00185 Roma (IT)**
• **MASTROIANNI, Simone I-00185 Roma (IT)**
• **REALE, Andrea I-00185 Roma (IT)**

• **BROWN, Thomas, Meredith I-00185 Roma (IT)**
• **PENNA, Stefano I-00185 Roma (IT)**

(74) Representative: **Iannone, Carlo Luigi Barzanò & Zanardo Roma S.p.A. Via Piemonte 26 00187 Roma (IT)**

(56) References cited:
**EP-A2- 1 065 141     US-B1- 6 291 761**

• **PETTERSSON H ET AL: "Long-term stability of low-power dye-sensitised solar cells prepared by industrial methods", SOLAR ENERGY MATERIALS AND SOLAR CELLS, ELSEVIER SCIENCE PUBLISHERS, AMSTERDAM, NL, vol. 70, no. 2, 15 December 2001 (2001-12-15), pages 203-212, XP004303754, ISSN: 0927-0248, DOI: 10.1016/S0927-0248(01)00025-3**

## Description

The present invention relates to the field of electric protection techniques and of ultraviolet radiation protection for photovoltaic devices of the Dye Sensitized solar Cell type, also known as DSSC photovoltaic devices.

Said DSSC photovoltaic devices can comprise one photovoltaic module or more photovoltaic modules connected each other, and each photovoltaic module can comprise one or more photoelectrochemical cells or DSSC cells.

More specifically, the invention refers to a structure of DSSC photovoltaic device of the above kind permitting to electric current to flow from one module to another one, or from a photoelectrochemical cell to another one, by-passing modules or shaded(s) or damaged cells, and that, at the same time prevents degradation of DSSC cells, such as photo-bleaching of electrolyte of said cells, and further degradation phenomenons due to interaction of the same cells and DSSC photovoltaic device with UV rays.

DSSC cells are photovoltaic cells comprised of a multilayer structure delimited by two substrates. Typically, said substrates are comprised of transparent materials (preferably glass, but also of PET or PEN), and are coated, on the side faced inside the multilayer structure, by an electrically conductive coating, which is also a transparent layer, (generally a transparent conductive oxide, preferably a titanium oxide doped with fluorine or iodine, respectively FTO and ITO).

A photoelectrode (anode), provided on conductive coating of one of the two substrates, a counter-electrode (cathode), on conductive coating of the other substrate, and an electrolyte between said photoelectrode and said counter-electrode are provided between the two substrates.

Particularly, photoelectrode is generally comprised of a semiconductor having a high band gap, as titanium or zinc oxide, in mesoporous form, supporting absorbing material, comprised of a colorant substance able to transfer electrons after absorption of a photon.

Counter-electrode is generally comprised of platinum, while electrolytic solution is generally based on an iodine redox couple ($I^-/I_3^-$).

At present, first generation (photovoltaic cells and modules comprised of mono- and poli-crystalline silicium wafer) and second generation (photovoltaic modules comprised of amorphous or microcrystalline semiconductor material thin film) photovoltaic devices provide bypass diodes.

Bypass diodes of said photovoltaic devices are conceived to protect p-n junction, preventing that said junction is subjected to breakage (breakdown phenomenon), in case cell works in inverted polarization region, thus behaving as a power dissipating load, instead of a current generator. US 6,291,761 B1 and EP 1 065 141 A2 disclose silicium photovoltaic devices comprising integrated bypass diodes.

Sol. Ener. Mater. Sol. Cells, 2001, 70, 203-212; discloses dye sensitised solar cells connected in series.

For example, a known crystalline silicium photovoltaic device provides presence of bypass diode every eighteen cells. This is due to simplicity requirements, costs, as well as to the needing of finding a compromise among the preceding requirements.

Only in some specific cases, i.e. when technical problem is that of making it maximum outlet power, in case of transitory or permanent shadowing of photovoltaic cells, or it is that of preventing diode provided for said plurality of cells is subjected to an excessive overheating, providing introduction of a bypass diode for each solar cell.

However, application of bypass diodes on a crystalline silicium photovoltaic device has some drawbacks.

One drawback is the fact that said bypass diodes occupy a relevant physical space in said photovoltaic device.

A second drawback, which is the consequence of the first one, is that passive area of photovoltaic device, i.e. area not useful to convert solar energy into electric energy, is increased proportionally to electric protection of said photovoltaic device.

Therefore, active area, i.e. area converting solar radiation into electric energy, is reduced proportionally to the number of bypass diodes provided in photovoltaic device.

Bypass diodes are also applied on DSSC photovoltaic devices, with the same aim set forth in the above for silicium photovoltaic devices.

However, also application of bypass diodes on said DSSC photovoltaic device has some drawbacks.

A first drawback is due to the fact that area occupied by said bypass diodes increases device passive area. In fact, reduction of active area depends on surface occupied by one or more bypass diodes, the presence of which jeopardizes efficiency on a total area of DSSC photovoltaic device, since efficiency is correlated to active area of photovoltaic device. Particularly, an index of total efficiency of DSSC photovoltaic device is percentage ratio between active area and total area, so called aperture ratio.

Particularly, when DSSC cells and their positive and negative electrodes are integrated within substrates, installation of many bypass diodes is complicated.

A further drawback is that bypass diodes in DSSC photovoltaic devices are neither mechanically integral with a photovoltaic device substrate, nor integral to the same, but they are simply applied by electric wires connected with photovoltaic device electrodes.

Therefore, contact points between said bypass diodes and electric wires, or between the latter and photovoltaic device electrodes can be caused by outage or loss of electric contact, when device is subjected to different working processes for final assembling of photovoltaic device, to environmental stresses, such as thermal or mechanical or luminous stresses. It is well evident that possibility that outage or electric energy contact loss occur increases when DSSC photovoltaic device is provided with a plurality of bypass diodes, such as in a DSSC photovoltaic device provided with a bypass diode for each cell.

Another drawback due to increase of passive area refers to an aesthetic worsening of the photovoltaic device due to a different transparence of the inactive spaces, i.e. not useful to conversion of solar energy into electric energy and present between strings of photovoltaic modules connected each other, with respect to active area.

Still another drawback is that application of said bypass diodes requires a strong manual intervention. Consequently, slowness of bypass diode application process on a photovoltaic module, possibility of mistaken when applying the same, reduced reproducibility of said process at a low velocity for realizing the DSSC photovoltaic device can represent further drawbacks due to manual application of said bypass diodes on photovoltaic device.

Moreover, known DSSC photovoltaic devices can be provided with a UV filter since UV radiation is one of the reasons why electrolyte photo-bleaching and other cell degradation phenomenons occur. In fact, UV radiation generates photo-oxidations on titanium dioxide conductive coating of substrates, covered by dye, and said photo-oxidations degrade either dye molecules and electrolyte, thus causing a reduction of triiodide ($I_3^-$) concentration, i.e. ion responsible of transfer of charges from counter-electrode to photoelectrode. When a cell works under limit current conditions (which is directly proportional to triiodide concentration), this involves a remarkable reduction of shortage current, and thus a reduction of performances.

However, presence of an UV filter does not completely prevent photo-bleaching of electrolyte under all working conditions of a DSSC cell, mainly when the latter is electrically interconnected with other cells.

Object of the present invention is that of overcoming said drawbacks, providing a DSSC photovoltaic device, wherein portion of passive area dedicated to electrical protection of same photovoltaic device, i.e. area occupied by one or more bypass diodes applied on said photovoltaic device, is reduced with respect to total area of photovoltaic device, or even null, and preventing degrade of dye molecule of DSSC cells and/or photo-bleaching of DSSC cells under every working condition, thus ensuring a better stability of DSSC photovoltaic device, due to a lower degradation of said DSSC cells.

The above has been obtained by providing a DSSC photovoltaic device comprising, in combination, bypass means to permit to electric energy to flow from one module to another one or from a DSSC cell to another one, thus by-passing shaded modules or cells, wherein bypass means are positioned on DSSC photovoltaic device so as to maximize active area, and UV filtering means to filter solar radiation preventing electrolyte photo-bleaching phenomenon of DSSC cell and further degradation phenomenons of cells, wherein said bypass means, combined with said filtering means, further inhibit said phenomenon.

Advantageously, combination of bypass means and UV filtering means in DSSC photovoltaic device protects cells with respect to above degradation phenomenons in a more efficient way with respect to the sole presence of UV filtering means, since bypass means impose a limit to negative tension that can be reached by cells and to electrochemical reactions, which are potentially dangerous.

It is therefore specific object of the present invention, a DSSC photovoltaic device comprising at least one photoelectrochemical cell provided with a negative electrode or photo-electrode and a positive electrode or counter electrode, said at least one photoelectrochemical cell being interposed between two substrates, a first substrate on the side of said positive electrode and a second substrate on the side of said negative electrode, each one of said substrates having a respective first face and a respective second face, opposed with respect to said first face, the first face of said first substrate being faced toward said first face of said second substrate, and a respective substrate lateral surface interposed between the first face and the second face of the respective substrates; said substrates being faced towards each other so that at least one portion of said first substrate lateral surface is aligned with a portion of said second substrate lateral surface; said DSSC photovoltaic device further comprising:

- integrated bypass means on said substrates, said bypass means comprising a bypass diode for said at least one photoelectrochemical cell, said bypass diode being provided on one lateral surface part of the photovoltaic device, wherein said lateral surface part is defined by at least two portions, a substrate lateral surface portion of said first substrate and a substrate lateral surface portion of said second substrate, and by an encapsulating material, comprised of electrically insulating material, interposed between said two portions;
- two conductive tracks connecting the anode and cathode of said bypass diode to the negative and positive electrode of said cell, respectively, and
- UV filtering means to at least partially filter UV radiation, applied on at least a face of said substrates, at least in correspondence of said at least one cell.

According to the invention, DSSC photovoltaic device can comprise a plurality of photoelectrochemical cells connected in series and said bypass means comprises a bypass diode for each of said photoelectrochemical cells.

Still according to the invention, DSSC photovoltaic device can comprise a plurality of photoelectrochemical cells connected in series, and said bypass means comprises a bypass diode for two or more of said photoelectrochemical cells which has the anode connected to the negative electrode of the first of said two or more photoelectrochemical cells and the cathode connected to the positive electrode of the last of said two or more of said photoelectrochemical cells.

Advantageously, DSSC photovoltaic device can comprise, for each bypass diode, a second bypass diode, located on the opposite edge of the photovoltaic device to that which said bypass diode is located.

Furthermore, at least one ground lateral surface can be provided on said at least one substrate and in that said bypass means are arranged on said ground lateral surface. Preferably, one or more housings are provided on at least one of said substrates, to accommodate a corresponding number of bypass diodes.

Advantageously, each bypass diode can be a Schottky diode.

In a first arrangement, conductive tracks can be made using conductive glue or resins.

In a second arrangement, conductive tracks can be made by conductive metal strips.

Further, metal strips can be further applied on said conductive tracks obtained by screen printing of conductive pastes or by glues or conductive resins.

Making reference to filtering means, the latter can filter UV radiation or solar spectrum portion with a wavelength lower than a threshold value within range between 390 nm and 410 nm.

Advantageously said filtering means can be applied on all the surface of at least a face of substrate exposed to the sun and/or on all surface of at least a face of substrate not exposed to the sun.

According to a first arrangement, said filtering means can comprise a UV filter comprised of polymeric material. Particularly, said UV filter can be a polyester, or polycarbonate or polyvinyl sheet or plate,

In a second arrangement, said filtering means can be comprised of a film or of a coating layer.

In a third arrangement, said filtering means can be comprised of at least one of said substrates:

Finally, at least a photoelectrochemical cell can comprise a plurality of cells connected each other in parallel.

The present invention will be now described, for illustrative, but not limitative purposes, according to its preferred embodiments, with particular reference to the enclosed figures, wherein:

figure 1 schematically shows a first embodiment of a photovoltaic device comprising a photovoltaic module with eight photoelectrochemical cells, a bypass diode and a UV filter;

figure 2 schematically shows a second embodiment of a photovoltaic device comprising a photovoltaic module which is provided with a bypass diode for each photoelectrochemical cell in said photovoltaic module, the inner contacts of which can be reached from outside, and a UV filter;

figure 3 schematically shows a third embodiment of a photovoltaic device comprising two photovoltaic modules side by side, each one provided with a bypass diode, and of a UV filter;

figure 4 is an exploded view of the photovoltaic device of figure 3;

figure 5 schematically shows a fourth embodiment of a photovoltaic device comprising two photovoltaic modules side by side, each one provided with a bypass diode, wherein both diodes are welded to a metallic strip, which is welded on silk printed conductive pastes on a relevant substrate of each module, and of a UV filter;

figure 6 is an exploded view of the photovoltaic device of figure 5;

figure 7 schematically shows a fifth embodiment of a photovoltaic device comprising two photovoltaic modules side by side, each one provided with a UV filter, and wherein a bypass diode is positioned straddling two substrates to protect the rightward photovoltaic module;

figure 8 is an exploded view of the photovoltaic device of figure 7;

figure 9 schematically shows a sixth embodiment of a photovoltaic device comprising two photovoltaic modules side by side, each one provided with a UV filter, and having an edge of a ground substrate, wherein a bypass diode is positioned straddling said ground edges to protect the rightward photovoltaic module;

figure 10 is an exploded view of the photovoltaic device of figure 9;

figure 11 schematically shows a variation of photovoltaic device of figure 9;

figure 12 schematically shows a seventh embodiment of a photovoltaic device comprising two photovoltaic modules side by side, each one provided with a UV filter, and wherein a bypass diode is housed within a seat obtained between substrates of the two photovoltaic modules;

figure 13 is an exploded view of the photovoltaic device of figure 12;

figure 14 schematically shows a eighth embodiment of a photovoltaic device comprising two photovoltaic modules side by side, each one provided with a UV filter, and wherein two bypass diodes are positioned on opposed edges of photovoltaic module, each one straddling edges of the two substrates;

figure 15 is an exploded view of the photovoltaic device of figure 14;

figure 16 shows a frame, vertically fixed to the ground, wherein four different DSSC photovoltaic devices are inserted, exposed to the sun radiation, comprising three DSSC photovoltaic modules, each one of said modules being provided with thirteen DSSC cells connected in series, wherein a first photovoltaic device is provided with a bypass diode for each DSSC cell and of a UV filter, a second photovoltaic device only provided with a bypass diode for each DSSC cell, a third photovoltaic device only provided with a UV filter, a fourth photovoltaic device without bypass filter and UV filter;

figures 17-20 show each one a pair of I-V curves measured after one month period, making reference to the first, the second, the third and the fourth DSSC photovoltaic device of figure 16.

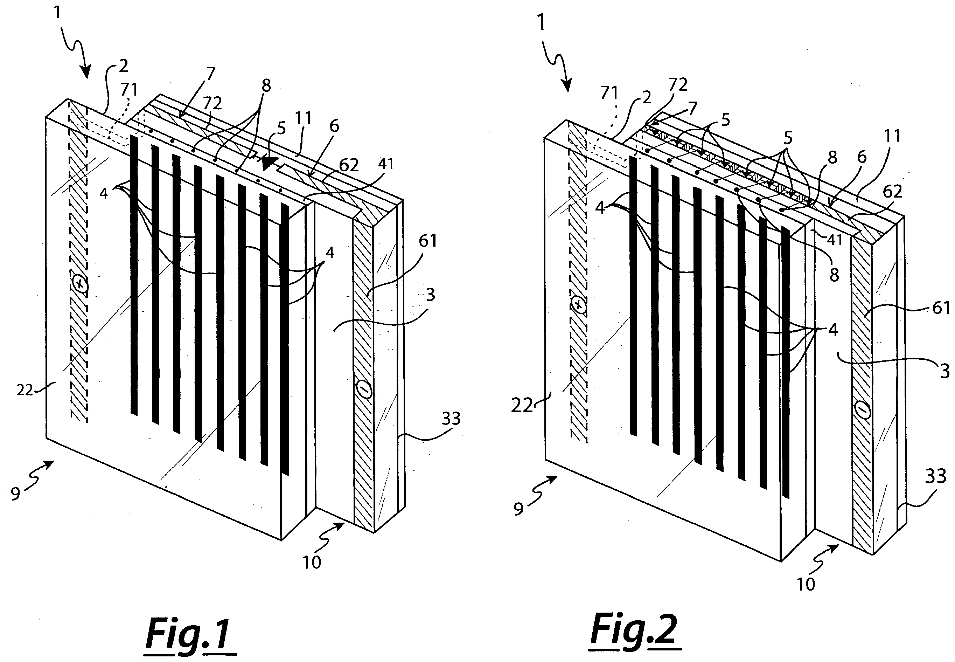

Making particular reference to figure 1, it is provided a first embodiment of a DSSC photovoltaic device comprising a photovoltaic module 1, comprising two substrates made up of conductive glass, namely a first substrate 9 and a second substrate 10, a plurality of photoelectrochemical cells or DSSC cells 4, interposed between said substrates 9, 10, encapsulated by an electrically insulating or encapsulating material 41, and connected in series by vertical contacts 8, electrodes of said cells 4 on each one of the substrates being electrically separated each other.

First substrate 9 and second substrate 10 respectively have a first face 2, 3 and a second face 22, 23, opposed with respect to said first face 2, 3, wherein first face 2 of said first substrate 9 is faced toward first face 3 of second substrate 10, and each one of said second faces 22, 33 is faced outward.

Particularly, first face 2 of first substrate 9 is positive electrode of photovoltaic module 1, while first face is negative electrode of the same photovoltaic module, and photovoltaic module 1 is exposed to sun radiation so that sun radiation incise on second face 33 of second substrate 10.

DSSC photovoltaic device further comprises:

- integrated bypass means, wherein said bypass means comprises first conductive track 6, connected with the negative electrode 3 of photovoltaic module 1, and a second conductive track 7, connected at positive electrode 2 of photovoltaic module 1, as well as a bypass diode 5, having electric terminals connected with said conductive tracks, as well as
- filtering means to filter UV radiation applied on photovoltaic device so as to be interposed between DSSC cells and sun radiation.

Particularly, cathode of said bypass diode 5 is electrically connected to positive electrode 2 of photovoltaic module 1, while anode of said bypass diode 5 is electrically connected with negative electrode 3.

In a variation (not shown), it is possible connecting cathode of said bypass diode 5 with positive electrode of a further photovoltaic module to be connected in series to said photovoltaic module 1.

Conductive tracks 6, 7 connecting said bypass diode 5 with electrodes 2, 3 of photovoltaic module 1 realizes a low resistance path for electric current.

In a first arrangement, it is preferred that conductive tracks 6, 7 are realized by silk printing deposition of conductive pastes.

In order to make silk printing of conductive tracks between bypass diode and photovoltaic module 1 easier, edge corners of glass substrate can be ground.

In a second arrangement, conductive tracks 6, 7 can be realized by strips or conductive metallic ribbons, or by a combination of the first and the second arrangement.

In a third arrangement, conductive tracks 6, 7 can be comprised of glues or conductive resins.

Making reference to bypass means, according to a basic feature of the invention, said bypass means are positioned on a lateral edge of DSSC photovoltaic device. Said lateral edge is defined by at least two portions, a portion of said first substrate 9 and a portion of said second substrate 10, and an encapsulating material 41, comprised of an electrically insulating material, interposed between said two portions.

As far as filtering means are concerned, in the present embodiment, they are applied on the second face 33 of the second substrate 10, i.e. substrate exposed to the sun.

However, even if not shown in the figures, it is preferred that said filtering means are applied on the second face 22 of the first substrate 9, i.e. the substrate not exposed toward the sun.

In the present embodiment, said filtering means 11 are comprised of a UV filter, indicated by reference number 11.

In this specific case, said UV filter is a polyester sheet or plate, having a set wavelength to cut UV radiation or the solar spectrum portion having a wavelength lower than a threshold value included within range 390 nm -410 nm.

For example, said plate can also be comprised of polycarbonate, or of polyvinyl.

However, said filtering means can be realized in different ways, without departing from the scope of the present invention.

For example, in a first arrangement, said filtering means can be comprised of a film applied on said second substrate 10.

In a second arrangement, said filtering means can be directly comprised of the second substrate 10. In this case, second substrate 10 must be comprised of a material having such physical properties to filter UV radiation, such as glass, comprising inside chemical additives, or glass provided with an outside coating layer.

In a third arrangement, said filtering means can be comprised of a coating layer made up of a material having such physical properties to filter UV radiation.

In the embodiment described, substrates 9, 10 have a rectangular shape and are offset, so as to create to projecting portions juxtaposed along longer sides. Eight photoelectrochemical cells 4 are present between faced portions of the two substrates. Further, a relevant UV filter is applied on the second face of each one of substrates exposed to the sun.

Electrodes of the photovoltaic module can be reached through each one of said substrates, respectively positive electrode 2 on substrate 9 projecting portion and negative electrode 3 on substrate 10 projecting portion.

Bypass diode 5 is applied on one of the lateral edges having a length lower than the second substrate 10, and conductive tracks 6, 7 respectively comprise first portions 61, 71, respectively, on each one of the projecting portions of the substrates, and second portions 62 and 72, respectively connected to said first portions 61 and 71, realized on said shorter edge on which the diode is applied.

In said first arrangement, bypass diode 5 permits to electric current to bypass photovoltaic module 1, in case cells are shaded.

Particularly, bypass diode 5 conducts when tension of shaded photoelectrochemical cells 4 is higher or equal to the sum of tensions of not shaded photoelectrochemical cells 4 and of threshold tension of said bypass diode 4:

$$\left| \sum_{i=1}^{n} V_S \right| \geq |V_D| + \sum_{k=1}^{m} V_{NS}$$

Wherein:

$V_s$ = negative tension of a shaded cell
$V_{ns}$ = positive tension of a not shaded cell
$V_d$ = threshold tension of diode

Assuming that $V_s$ tensions are equal for all shaded photoelectrochemical cells 4 and that tensions $V_{ns}$ are equal for all not shaded photoelectrochemical cells 4, it is obtained:

$$|nV_S| \geq |V_D| + mV_{NS}$$

In a second embodiment, shown in figure 2, differently from first embodiment, it is provided a bypass diode 5 for each one of the photoelectrochemical cells 4 of photovoltaic module 1.

Advantageously, said second embodiment permits the electric current to bypass a single photoelectrochemical cell 4, in case it is shaded.

A first diode bypass 5 is connected by a conductive track 6 with negative electrode 3 for access to photovoltaic module 1, that is also negative electrode of a first photoelectrochemical cell 4, while other seven bypass diodes 5 are connected, by a relevant conductive track 7, with a corresponding vertical contact 8, between photoelectrochemical cells 4, with electrodes of said cells on each one of substrates which are electrically separated each other.

In other words, eight aligned diodes 5 are provided on an edge of glass substrate 10, wherein first diode 5 is connected with negative electrode 3 for access to photovoltaic module 1, eighth bypass diode 5 is connected to positive electrode of said photovoltaic module 1, and six intermediate bypass diodes 5 connected to vertical contacts 8 of cells 4.

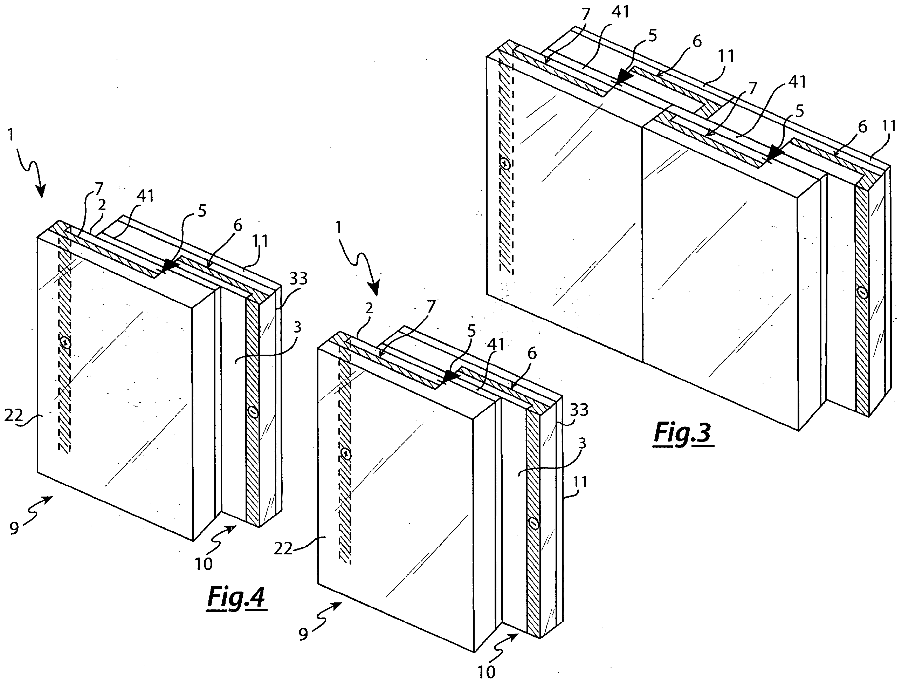

In a third embodiment, shown in figures 3 and 4, two photovoltaic modules are placed side by side each other, photovoltaic module comprising a bypass diode 5 for each one of said modules, and a UV filter.

A relevant conductive track 6 is provided on substrates 9, 10 of each module 1, contacting negative electrode 3 of photovoltaic module, and a conductive track 7 contacting positive electrode 2.

Bypass diode 5 is placed, for each photovoltaic module, straddling said substrates 9, 10, so as to have its electrical terminals respectively connected with said conductive tracks.

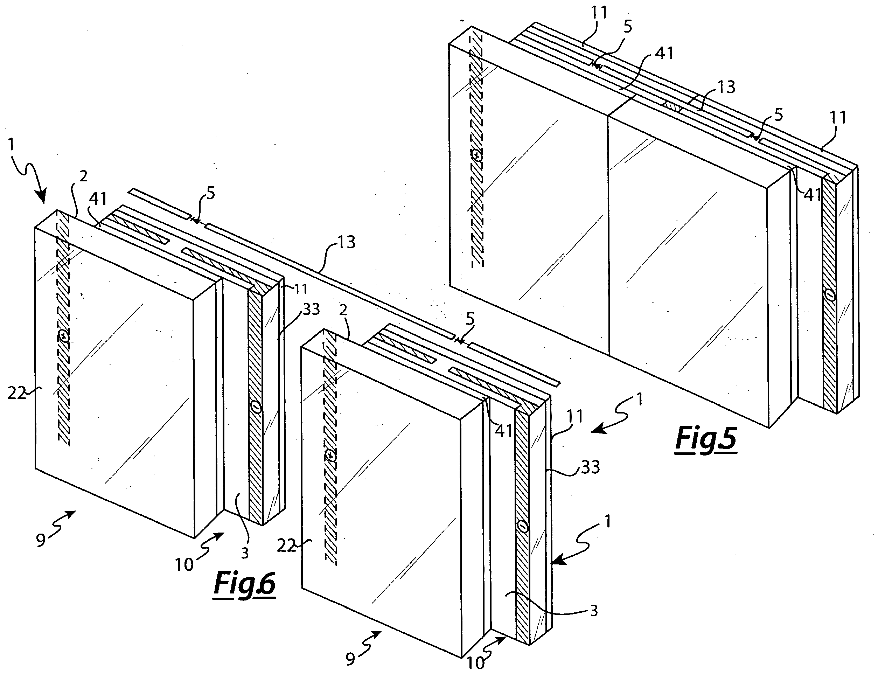

In a fourth embodiment, shown in figures 5 and 6, photovoltaic device comprises two photovoltaic modules 1, as those shown in figure 1, wherein conductive tracks 6, 7 are obtained first silk printing a conductive paste, and then welding a metallic strip 13 on said conductive paste, to which two bypass diodes are welded.

Advantageously, photovoltaic device of said embodiment is more robust with respect to mechanical stresses.

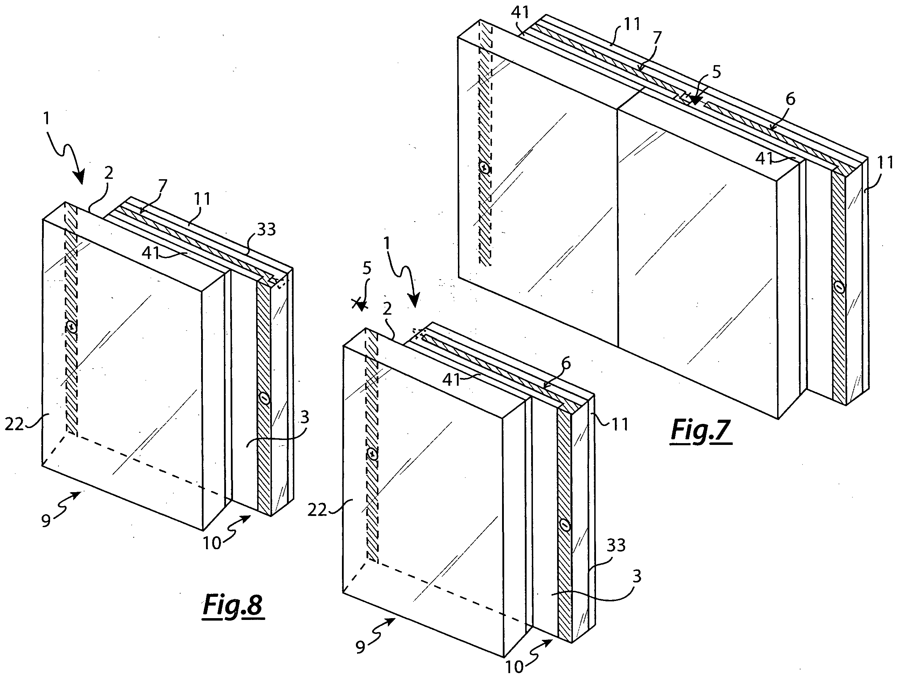

In fifth embodiment, shown in figures 7 and 8, photovoltaic device comprises two photovoltaic modules 1, side by side, each one provided with a UV filter, with a bypass diode 5 straddling two substrates 10, in correspondence of relevant lower edges. Consequently, two photovoltaic modules are fixed each other so that bypass diode 5 connects negative electrode 3 of first photovoltaic module with positive electrode 2 of second photovoltaic module, respectively through conductive track 6 of the first photovoltaic module and conductive track 7 of second photovoltaic module.

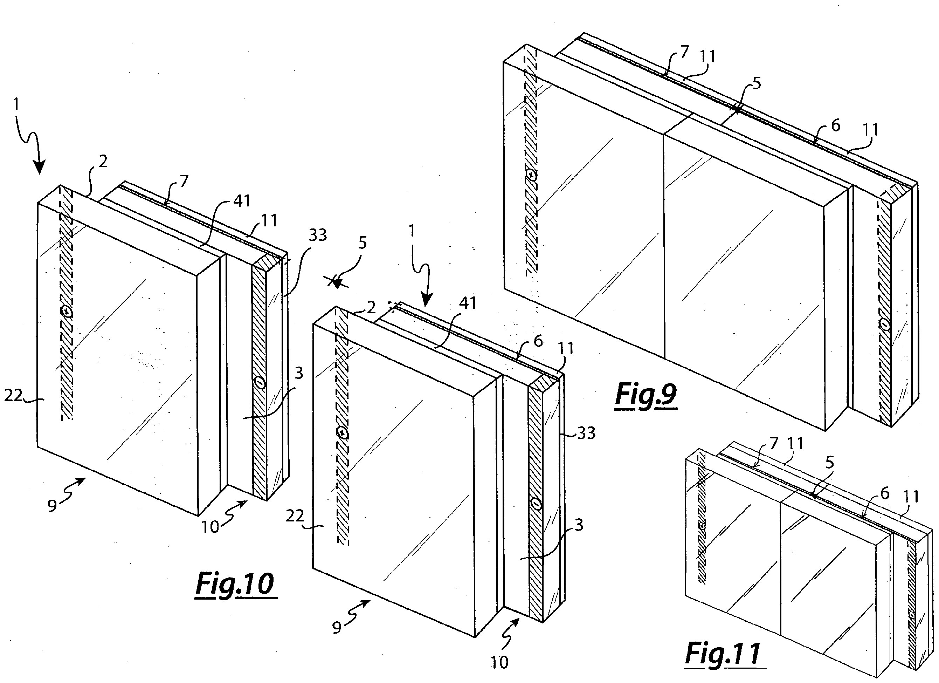

In a sixth embodiment, shown in figure 9 and 10, photovoltaic module is provided with UV filter and provides a relevant ground edge on substrates of both photovoltaic modules, on which bypass diode 5 and conductive tracks 6, 7 are provided.

Particularly, grinding is provided on each substrate 10, in correspondence of one of the corners between a lower edge and that of the substrate wall.

Bypass diode 5 is provided on ground edge, straddling contact zone between two substrates 10, and each one of conductive tracks 6, 7 is substantially provided on the relevant ground edge.

In the described example, grinding is realised on substrate 10 corner between lower edge and substrate wall faced outside, but grinding can be provided on the opposite corner of the same substrate 10, i.e. on the corner between the same edge and substrate wall 10 faced toward photoelectrochemical cells 4 (fig. 11).

Advantageously, bypass diode 5 is less visible from outside, since partially covered by substrates 9 of each photovoltaic module, opposed to substrates 10 on which grinding is provided. As far as transparency is concerned, the fact that bypass diode 5 is less visible involves a higher uniformity of the whole photovoltaic device.

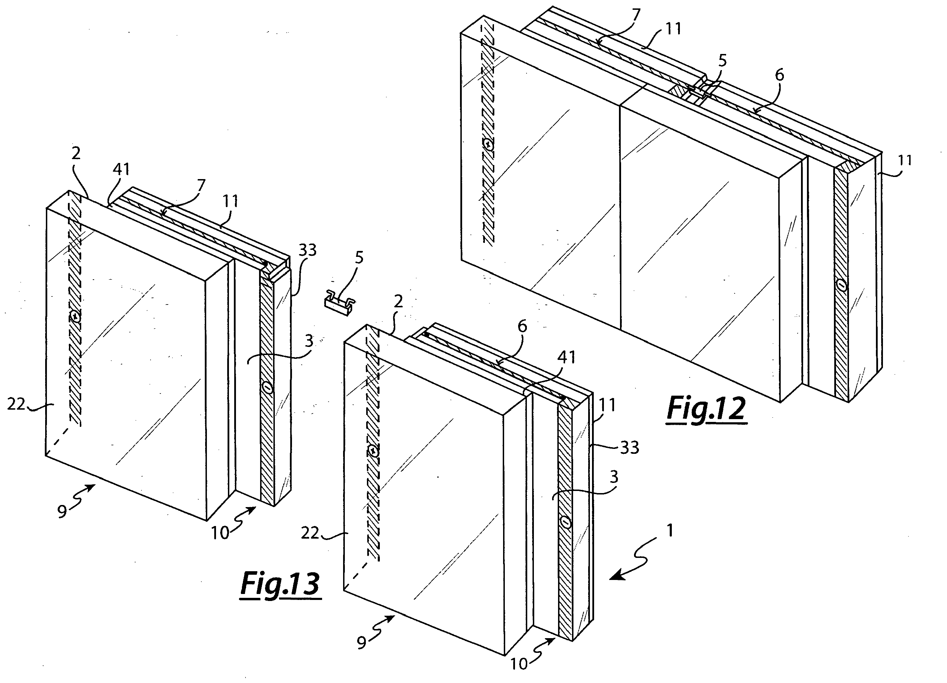

In a seventh embodiment, shown in figure 12 and 13, photovoltaic device is provided with a UV filter and has a seat for housing of bypass diode 5 realised in contact zone between two glass substrates.

In a variation (not shown), said seat can be realised on a shorter edge of one of the substrates 10, preferably in central portion of said edge.

Advantageously, presence of a suitable housing prevents that bypass diode 5 is provided on the edge of photovoltaic device, thus reducing passive area.

In further variations (not shown), for each one of the described embodiments, it is possible providing presence of one or more further bypass diodes 5' on the edge of the photovoltaic device opposite with respect to the edge on which bypass diodes 5 are provided, so as to be a specular image, along with UV filters applied on at least a face of each module comprising the photovoltaic module.

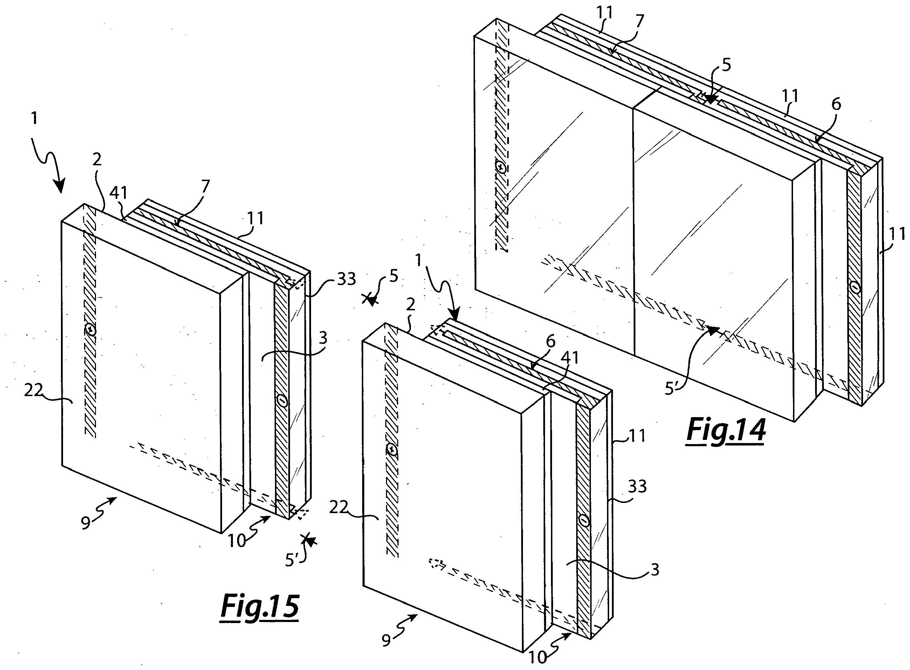

For example, as shown in figure 14 and 15, photovoltaic device, in an eighth embodiment, has a further bypass diode 5', positioned on the edge opposite with respect to the one on which bypass diode is provided, i.e. straddling the two shorter edges of substrates 10 opposed with respect to those on which it is provided, straddling. Bypass diode 5, along with a UV filter on the second edge of the second substrate of each photovoltaic module.

Advantageously, the use of one or more further diodes 5' diminishes path that current must make to arrive to the diode, thus reducing diode resistance.

Further, presence of further bypass diodes 5' ensures an additional protection in case one or more bypass diodes are damaged.

For each one of the above embodiments, in order to protect photoelectrochemical cell(s), bypass diode(s) must be in the conduction state.

Conduction state of each bypass diode 5 depends on number of photoelectrochemical cells 4 connected to the same bypass diode 5.

In order that bypass diode 5 is in the conduction, tension Vs of shaded photoelectrochemical cell 4 must satisfy the following equation:

$$V_s \geq V_d + (n-1)V_{oc}$$

Wherein:

$V_d$ = tension in diode at the conduction state as an absolute value;
$V_{oc}$ = tension of open cell circuit,

N = number of cells connected to diode.

According to the invention, in order to ensure a complete protection of photoelectrochemical cells 4 of each photovoltaic module 1 with respect to degradations due to an unbalancing of cells connected in series each other, it is necessary providing a bypass diode 5 for each one of said photoelectrochemical cells.

To confirm the above, in case the following values are introduced in the above equation:

$V_s$ = 1.2V (value of threshold negative tension as an absolute value, beyond which cell is quickly compromised),
$V_d$ = about 0.6V (value of threshold tension in order that a p-n junction diode begins conducting),
$V_{oc}$ = about 0.75V (value of maximum tension that can provide a cell under direct polarization).

$$n_{max} \leq 1 + (V_s - V_d)/V_{oc}$$

$$n_{max} \leq 1 + (1,5 - 0,8)/0,75$$

$$n_{max} \leq 1,9$$

thus, with a threshold tension equal to 1.2V and with a p-n junction diode, it is necessary installing a bypass diode for each cell.

Lower is the value of tension $V_d$ of bypass diode 5 to start conducting, higher is number of photoelectrochemical cells 4 that can be connected to said bypass diode, thus ensuring that negative tension of each one of said cells does not pass (as absolute value) set value 1.2V.

Furthermore, a lower tension value $V_d$ permits to the bypass diode 5 to start before conducting, so that each cell, even for partial shading, is bypassed by electric current.

Therefore, it is preferred applying a diode the threshold tension of which is as more low as possible, such as a Schottky diode, with a threshold tension of about 0.2V, lower than that of p-n junction diode.

If tension value $V_d$ of a diode having a p-n junction of 0.6V is replaced by value 0.2V of a Schottky diode, it will be obtained:

$$n_{max} \leq 2,6$$

The above means that, with the same threshold tension, in case diode is a Schottky diode, it is possible applying a Schottky diode every two cells.

Advantageously, a Schottky diode also permits maximizing power at the outlet of the photovoltaic diode.

However, it is preferred ensuring that threshold tension is, as absolute value, as more low as possible.

Some experimental indication suggests that said tension threshold is lower than or equal to 0.5V, so that a cell is not subjected to degradation.

p-n junction diode is not able ensuring a threshold tension value $V_s$ of 0.5V.

In case a Schottky diode is employed, with the same tension $V_d$ value of about 0.2V and $V_{oc}$ = about 0.75V:

$$n_{max} \leq 1 + (V_s - V_d)/V_{oc}$$

$$n_{max} \leq 1 + (0,5 - 0,2)/0,75$$

$$n_{max} \leq 1,4$$

Thus, by using a number of Schottky diodes corresponding to the number of DSSSC cells of photovoltaic device, it is possible ensuring that set threshold value is not passed.

For the embodiments wherein photovoltaic device comprises two photovoltaic modules side by side, a first photovoltaic module and a further photovoltaic module, each one provided with UV filter, in order to realize connection between said two photovoltaic modules, it is usually interposed a material between positive electrode of substrate 9 of first module and negative electrode of substrate 10 of said further module to fill in space between encapsulating material 41 of the two photovoltaic modules.

Said conducting material can realize a shortage element between said positive electrode of substrate 9 of first module and negative electrode of substrate 10 of the same module, or between negative electrode of substrate 10 of said further module and positive electrode 9 of the same further module.

Short-circuit is prevented realizing two electrical insulations, e.g. by using laser scribing technique, a first electric insulation on conductive coating of the second substrate 10 of said first photovoltaic module, close to said first portion 71 of conductive track 7, and a second electric insulation on conductive coating of first substrate 9 of said further photovoltaic module, close to the first portion 61 of the conductive track 6.

For each one of the above embodiments, even if not shown in the figures, each one DSSC cell can be comprised of a plurality of cells connected in parallel each other.

Further, in case negative and positive electrodes of each DSSC cell cannot be reached, they can be brought outside, e.g. by deposition of silver on a substrate corner and on lateral edge of DSSC photovoltaic device so as to prolong conductive tracks outside the substrates.

Furthermore, as already mentioned, bypass means are positioned on at least a lateral edge of DSSC photovoltaic device, or on opposed lateral edges.

Although in the above embodiments substrates 9 and 10 are represented with a rectangular shape and are coupled offset each other, it is possible providing that the two substrates have any other shape and are overlapped each other.

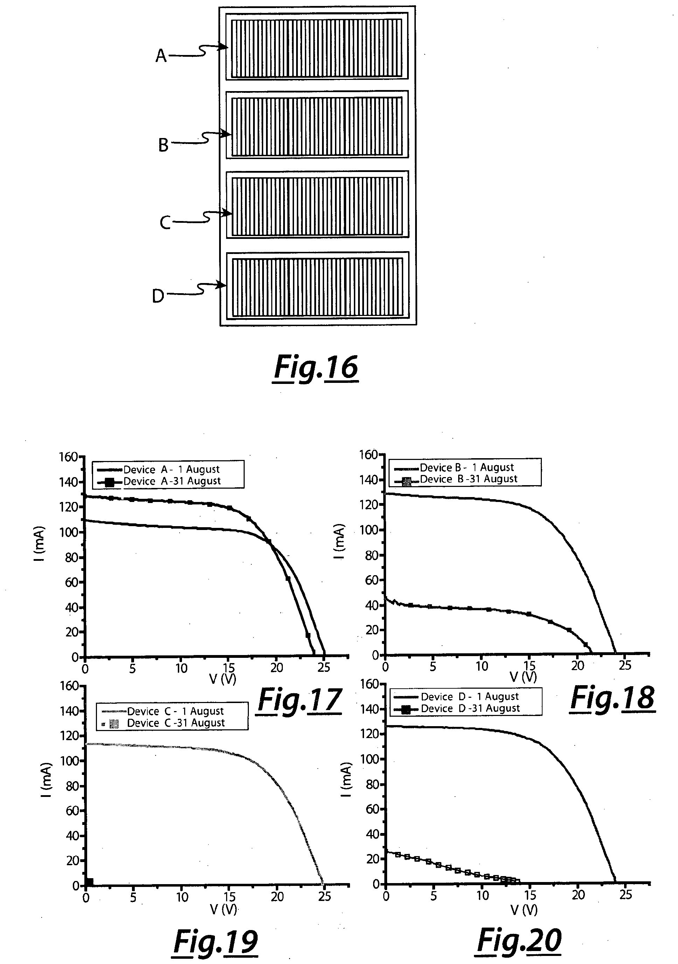

Figure 16 shows a frame, vertically fixed to the ground, supporting four different DSSC photovoltaic devices, respectively indicated by references A, B, C, and D, exposed to sun radiation to be subjected to an ageing test. Said photovoltaic devices have been oriented to the South with a tilt angle of 90° and operation point of each one of them has been adjusted to the maximum power point.

Each DSSC photovoltaic device comprises three DSSC photovoltaic modules connected in series each other, each one provided with thirteen DSSC cells, connected in series.

Particularly, first photovoltaic device A is provided with a bypass diode for each DSSC cell and with a UV filter.

Second photovoltaic device B is only provided with a bypass diode for each DSSC cell.

Third photovoltaic device C is only provided with UV filter.

Fourth photovoltaic device D has no bypass diode and UV filter.

Making reference to figures 17-20, each one shows a pair of I-V curves, measured after one month, with reference to respective DSSC photovoltaic device.

Particularly, figure 17 shows a pair of I-V curves of first photovoltaic device DSSC, indicated by reference A.

Figure 18 shows a pair of I-V curves of second photovoltaic device DSSC, indicated by reference B.
Figure 19 shows a pair of I-V curves of third photovoltaic device DSSC, indicated by reference C.
Figure 20 shows a pair of I-V curves of fourth photovoltaic device DSSC, indicated by reference D.

From the pairs of I-V curves shown in above figures 17-20, it can be observed that presence of bypass diodes and UV filter in first photovoltaic device A ensure a better stability after some time. On the contrary, from curves shown in figures 18-20, it is noted a remarkable reduction of performances of DSSC photovoltaic device.

Example

In order to put into evidence advantages of DSSC photovoltaic device according to the invention due to a lower passive area and to a higher power delivered, said DSSC photovoltaic device is compared in the following with a known DSSC photovoltaic device.

Known DSSC photovoltaic device comprises a photovoltaic module provided with a bypass diode not integral with any substrate and connected with electrodes of photovoltaic module by electric wires, while DSSC photovoltaic device according to the invention comprises a DSSC photovoltaic module provided with an bypass diode integrated on a substrate (e.g. inserted within a suitable housing obtained in a substrate) and silk printed conductive tracks connecting said diode to electrode of the same module.

Known photovoltaic device is characterized by the following parameters:

> total area: 182.76 cm$^2$
> active area: 108.8 cm$^2$
> aperture ratio: 59%,
> wherein total area is due to the sum of two areas, a first area of 177.76 cm$^2$ relevant to a surface of photovoltaic module without bypass diode, and a second area of 5 cm$^2$ of area occupied by bypass diode and of an area surrounding said diode and provided between said module and a further module to be connected in series to the same.

Device according to the invention has the following parameters:

> total area: 177.76 cm$^2$
> active area: 108.8 cm$^2$
> aperture ratio: 61%.

As it can be noted, application of bypass diode increases dimensions of total area of device, since it must be taken into consideration both areas occupied by bypass diode and area about said diode. Said area, which is area between a module and a further module to be connected to the previous one, in not used.

The above jeopardizes efficiency on total area of the same photovoltaic module.

Taking into consideration power generated under standard test conditions (STC) of 0.6 Watt as power produced by a photovoltaic module, an efficiency of active area of 5:6% is obtained.

In known device, multiplying said efficiency for aperture ratio value, is obtained a total efficiency percentage of about 3.3%, while for device according to the invention a total efficiency percentage of about 3.4% is obtained, thus higher than the known device.

As already mentioned in the above, as far as photovoltaic device transparency, bypass device inserted within a suitable housing permits to photovoltaic device to have a more uniform transparency with respect to the case where diode is not integral to a substrate or to the case wherein substrate is positioned on substrate.

The above is well evident if a parameter is taken into consideration identifying percentage ratio between transparent area and not transparent area of a photovoltaic module.

With the same transparent area, of about 154 cm$^2$, in a known photovoltaic module said ratio is 84%, while for photovoltaic according to the invention, said ratio is 86%, with an improvement of total transparency of photovoltaic module of about 2%.

Advantageously, as already mentioned, passive area occupied by bypass diodes is made minimum with respect to total area of photovoltaic device, making is integral one or more bypass diodes with at least one substrate of a photovoltaic module, or placing said bypass diodes in a grinding, or within suitable housings obtained in the same substrates.

A second advantage is due to the fact that said passive area is further reduced by suitable conductive tracks, e.g. realized by silk printing of conductive pastes or by applying metallic strips, at the same time reducing manual intervention.

Still another advantage is due to the fact that combination of bypass means and of UV filtering means prevents acceleration of DSSC cell degradation process. In fact, on one hand, bypass means prevent that a shaded or damaged DSSC cell jeopardizes performances of further cells connected in series with the same, and on the other hand, fixing an inverse tension of maximum threshold, preventing photo-bleaching reactions of electrolyte regardless working conditions of said DSSC cells, said photo-bleaching reactions being further prevented by said UV filtering means.

Another advantage is that photovoltaic device according to the invention is more resistant to stresses caused by environmental conditions and/or due to assembling of the same photovoltaic device and/or to installation of the device of the latter.

Still another advantage is reduction of visual impact of area destined to electric protection of photovoltaic device.

**Claims**

1. DSSC photovoltaic device comprising at least one photoelectrochemical cell (4) provided with a negative electrode or photo-electrode and a positive electrode or counter electrode, said at least one photoelectrochemical cell (4) being interposed between two substrates, a first substrate (9) on the side of said positive electrode and a second substrate (10) on the side of said negative electrode, each one of said substrates (9, 10) having a respective first face (2, 3), a respective second face (22, 33), opposed with respect to said first face, the first face (2) of said first substrate (9) being faced toward said first face (3) of said second substrate (10), and a respective substrate lateral surface interposed between the first face (2, 3) and the second face (22, 33) of the respective substrate (9, 10); said substrates (9, 10) being faced towards each other so that at least one portion of said first substrate lateral surface is aligned with a portion of said second substrate lateral surface;

said DSSC photovoltaic device being **characterized in that** it further comprises:

- integrated bypass means on said substrates, said bypass means comprising a bypass diode (5, 5') for said at least one photoelectrochemical cell (4), said bypass diode (5) being provided on one lateral surface part of the photovoltaic device, wherein said photovoltaic device lateral surface is defined by at least two portions, a substrate lateral surface portion of said first substrate (9) and a substrate lateral surface portion of said second substrate (10), and by an encapsulating material (41), comprised of electrically insulating material, interposed between said two portions;

- two conductive tracks (6, 7) connecting the anode and cathode of said bypass diode (5, 5') to the negative and positive electrode of said cell, respectively, and

- UV filtering means to at least partially filter UV radiation, applied on at least a face (2, 22, 3, 33) of said substrates (9, 10), at least in correspondence of said at least one cell.

2. DSSC photovoltaic device according to claim 1, **characterized in that** it comprises a plurality of photoelectrochemical cells (4) connected in series and said bypass means comprises a bypass diode (5, 5') for each of said photoelectrochemical cells (4).

3. DSSC photovoltaic device according to claim 1, **characterized in that** it comprises a plurality of photoelectrochemical cells (4) connected in series, and said bypass means comprises a bypass diode (5, 5') for two or more of said photoelectrochemical cells (4) which has the anode connected to the negative electrode of the first of said two or more photoelectrochemical cells (4) and the cathode connected to the positive electrode of the last of said two or more of said photoelectrochemical cells (4).

4. DSSC photovoltaic device according to one of the preceding claims, **characterized in that** it comprises, for each bypass diode (5, 5'), a second bypass diode (5', 5), located on the opposite edge of the photovoltaic device to that which said bypass diode (5, 5') is located.

5. DSSC photovoltaic device according to one of the preceding claims, **characterized in that** at least one ground lateral surface is provided on said at least one substrate (9, 10) and **in that** said bypass means are arranged on said ground lateral surface.

6. DSSC photovoltaic device according to one of the preceding claims 1 - 4, **characterized in that** one or more housings are provided on at least one of said substrates (9, 10), to accommodate a corresponding number of bypass diodes (5, 5').

7. DSSC photovoltaic device according to one of the preceding claims, **characterized in that** each bypass diode (5, 5') is a Schottky diode.

8. DSSC photovoltaic device according to one of the preceding claims 1 - 7, **characterized in that** conductive tracks (6, 7) are realized using conductive glue or resins.

9. DSSC photovoltaic device according to one of the preceding claims 1 - 7, **characterized in that** conductive tracks (6, 7) are realized by conductive metal strips.

10. DSSC photovoltaic device according to one of the preceding claims 8 - 9, **characterized in that** metal strips (13) are further applied on said conductive tracks (6, 7).

11. DSSC photovoltaic device according to one of the preceding claims, **characterized in that** said filtering means are filter UV radiation or solar spectrum portion with a wavelength lower than a threshold value within range between 390 nm and 410 nm.

12. DSSC photovoltaic device according to one of the preceding claims, **characterized in that** said filtering means are applied on all the surface of at least a face of substrate exposed to the sun and/or on all surface of at least a face (2, 22, 3, 33) of substrate (9, 10) exposed to the sun.

13. DSSC photovoltaic device according to one of the preceding claims, **characterized in that** said filtering means are applied on all the surface of at least a face of substrate exposed to the sun and/or on all surface of at least a face (2, 22, 3, 33) of substrate (9, 10) not exposed to the sun.

14. DSSC photovoltaic device according to one of the preceding claims, **characterized in that** said filtering means comprise a UV filter (11) comprised of a polymeric material sheet or plate.

15. DSSC photovoltaic device according to the preceding claim, **characterized in that** said UV filter (11) is comprised of polyester or polycarbonate or polyvinyl

16. DSSC photovoltaic device according to one of the preceding claims 1 - 13, **characterized in that** said filtering means are comprised of a film or of a coating layer.

**17.** DSSC photovoltaic device according to one of the preceding claims 1 - 13, **characterized in that** said filtering means are comprised of at least one of said substrates.

**18.** DSSC photovoltaic device according to one of the preceding claims, **characterized in that** at least a photoelectrochemical cell can comprise a plurality of cells connected each other in parallel.

**Patentansprüche**

**1.** Photovoltaische DSSC-Vorrichtung, umfassend zumindest eine photoelektrochemische Zelle (4), die mit einer negativen Elektrode oder Photoelektrode und einer positiven Elektrode oder Gegenelektrode versehen ist, wobei die zumindest eine photoelektrochemische Zelle (4) zwischen zwei Substraten angeordnet ist, einem ersten Substrat (9) auf der Seite der positiven Elektrode und einem zweiten Substrat (10) auf der Seite der negativen Elektrode, wobei jedes der Substrate (9, 10) eine entsprechende erste Stirnseite (2, 3), eine entsprechende zweite Stirnseite (22, 33), bezüglich der ersten Stirnseite gegenüberliegend, wobei die erste Stirnseite (2) des ersten Substrats (9) der ersten Stirnseite (3) des zweiten Substrats (10) zugewandt ist, und eine entsprechende Substrat-Seitenfläche, die zwischen der ersten Stirnseite (2, 3) und der zweiten Stirnseite (22, 33) des entsprechenden Substrats (9, 10) angeordnet ist, aufweist; wobei die Substrate (9, 10) einander zugewandt sind, sodass zumindest ein Teil der ersten Substrat-Seitenfläche mit einem Teil der zweiten Substrat-Seitenfläche ausgerichtet ist; wobei die photovoltaische DSSC-Vorrichtung **dadurch gekennzeichnet ist, dass** sie weiter umfasst:

- integrierte Umgehungsmittel auf den Substraten, wobei die Umgehungsmittel eine Umgehungsdiode (5, 5') für die zumindest eine photoelektrochemische Zelle (4) umfassen, wobei die Umgehungsdiode (5) auf einem Seitenflächenteil der photovoltaischen Vorrichtung vorgesehen ist, wobei die photovoltaische Vorrichtungs-Seitenfläche durch zumindest zwei Teile, ein Substrat-Seitenflächenteil des ersten Substrats (9) und ein Substrat-Seitenflächenteil des zweiten Substrats (10), und durch ein Einkapselungsmaterial (41), bestehend aus elektrisch isolierendem Material, das zwischen den zwei Teilen angeordnet ist, definiert ist;
- zwei Leiterbahnen (6, 7), die die Anode und die Kathode der Umgehungsdiode (5, 5') mit der negativen bzw. der positiven Elektrode der Zelle verbinden, und
- UV-Filtermittel zum zumindest teilweisen Filtern von UV-Strahlung, die auf zumindest einer Stirnseite (2, 22, 3, 33) der Substrate (9, 10) zumindest in Übereinstimmung mit der zumindest einen Zelle aufgebracht sind.

**2.** Photovoltaische DSSC-Vorrichtung nach Anspruch 1, **dadurch gekennzeichnet, dass** sie eine Mehrzahl von photoelektrochemischen Zellen (4) umfasst, die in Reihe geschaltet sind, und dass die Umgehungsmittel eine Umgehungsdiode (5, 5') für jede der photoelektrochemischen Zellen (4) umfassen.

**3.** Photovoltaische DSSC-Vorrichtung nach Anspruch 1, **dadurch gekennzeichnet, dass** sie eine Mehrzahl von photoelektrochemischen Zellen (4) umfasst, die in Reihe geschaltet sind, und dass die Umgehungsmittel eine Umgehungsdiode (5, 5') für zwei oder mehr photoelektrochemische Zellen (4) umfassen, welche die Anode mit der negativen Elektrode der ersten der zwei oder mehr photoelektrochemischen Zellen (4) verbindet und die Kathode mit der positiven Elektrode der letzten der zwei oder mehr photoelektrochemischen Zellen (4) verbindet.

**4.** Photovoltaische DSSC-Vorrichtung nach einem der vorstehenden Ansprüche, **dadurch gekennzeichnet, dass** sie für jede Umgehungsdiode (5, 5') eine zweite Umgehungsdiode (5', 5) umfasst, die sich auf der Kante der photovoltaischen Vorrichtung befindet, die derjenigen gegenüberliegt, auf der sich die Umgehungsdiode (5, 5') befindet.

**5.** Photovoltaische DSSC-Vorrichtung nach einem der vorstehenden Ansprüche, **dadurch gekennzeichnet, dass** zumindest eine Boden-Seitenfläche auf dem zumindest einen Substrat (9, 10) vorgesehen ist und **dadurch**, dass die Umgehungsmittel auf der Boden-Seitenfläche angeordnet sind.

**6.** Photovoltaische DSSC-Vorrichtung nach einem der vorstehenden Ansprüche 1 - 4, **dadurch gekennzeichnet, dass** ein oder mehrere Gehäuse auf zumindest einem der Substrate (9, 10) vorgesehen sind, um eine entsprechende Anzahl von Umgehungsdioden (5, 5') aufzunehmen.

**7.** Photovoltaische DSSC-Vorrichtung nach einem der vorstehenden Ansprüche, **dadurch gekennzeichnet, dass** jede Umgehungsdiode (5, 5') eine Schottky-Diode ist.

**8.** Photovoltaische DSSC-Vorrichtung nach einem der vorstehenden Ansprüche 1 - 7, **dadurch gekennzeichnet, dass** die Leiterbahnen (6, 7) unter Verwendung von leitendem Klebstoff oder Harzen realisiert sind.

**9.** Photovoltaische DSSC-Vorrichtung nach einem der vorstehenden Ansprüche 1 - 7, **dadurch gekennzeichnet, dass** die Leiterbahnen (6, 7) durch leitende Metallstreifen realisiert sind.

10. Photovoltaische DSSC-Vorrichtung nach einem der vorstehenden Ansprüche 8 - 9, **dadurch gekennzeichnet, dass** Metallstreifen (13) weiter auf die Leiterbahnen (6, 7) aufgebracht sind.

11. Photovoltaische DSSC-Vorrichtung nach einem der vorstehenden Ansprüche, **dadurch gekennzeichnet, dass** die Filtermittel UV-Strahlung oder einen Teil des Sonnenspektrums mit einer Wellenlänge filtern, die niedriger als ein Schwellenwert innerhalb eines Bereichs zwischen 390 nm und 410 nm ist.

12. Photovoltaische DSSC-Vorrichtung nach einem der vorstehenden Ansprüche, **dadurch gekennzeichnet, dass** die Filtermittel auf der gesamten Oberfläche von zumindest einer Stirnseite des Substrats, die der Sonne ausgesetzt ist, und/oder auf allen Oberflächen von zumindest einer Stirnseite (2, 22, 3, 33) des Substrats (9, 10), die der Sonne ausgesetzt sind, aufgebracht sind.

13. Photovoltaische DSSC-Vorrichtung nach einem der vorstehenden Ansprüche, **dadurch gekennzeichnet, dass** die Filtermittel auf der gesamten Oberfläche von zumindest einer Stirnseite des Substrats, die der Sonne ausgesetzt ist, und/oder auf allen Oberflächen von zumindest einer Stirnseite (2, 22, 3, 33) des Substrats (9, 10), die der Sonne nicht ausgesetzt sind, aufgebracht sind.

14. Photovoltaische DSSC-Vorrichtung nach einem der vorstehenden Ansprüche, **dadurch gekennzeichnet, dass** die Filtermittel einen UV-Filter (11) umfassen, der aus einer polymeren Materialbahn oder -platte besteht.

15. Photovoltaische DSSC-Vorrichtung nach einem der vorstehenden Ansprüche, **dadurch gekennzeichnet, dass** der UV-Filter (11) aus Polyester oder Polycarbonat oder Polyvinyl besteht.

16. Photovoltaische DSSC-Vorrichtung nach einem der vorstehenden Ansprüche 1 - 13, **dadurch gekennzeichnet, dass** die Filtermittel aus einer Folie oder aus einer Überzugsschicht bestehen.

17. Photovoltaische DSSC-Vorrichtung nach einem der vorstehenden Ansprüche 1 - 13, **dadurch gekennzeichnet, dass** die Filtermittel aus zumindest einem der Substrate bestehen.

18. Photovoltaische DSSC-Vorrichtung nach einem der vorstehenden Ansprüche, **dadurch gekennzeichnet, dass** zumindest eine photoelektrochemische Zelle eine Mehrzahl von Zellen, die parallel miteinander verbunden sind, umfassen kann.

## Revendications

1. Dispositif photovoltaïque DSSC comprenant au moins une cellule photoélectrochimique (4) pourvue d'une électrode négative ou d'une photo-électrode et d'une électrode positive ou d'une contre-électrode, ladite au moins une cellule photoélectrochimique (4) étant intercalée entre deux substrats, un premier substrat (9) du côté de ladite électrode positive et un second substrat (10) du côté de ladite électrode négative, chacun desdits substrats (9, 10) ayant une première face respective (2, 3), une seconde face respective (22, 33) opposée par rapport à ladite première face, la première face (2) dudit premier substrat (9) étant tournée vers ladite première face (3) dudit second substrat (10), et une surface latérale de substrat respective intercalée entre la première face (2, 3) et la seconde face (22, 33) du substrat respectif (9, 10) ; lesdits substrats (9, 10) étant tournés l'un vers l'autre de sorte qu'au moins une partie de ladite première surface latérale du substrat soit alignée avec une partie de ladite seconde surface latérale du substrat ;
ledit dispositif photovoltaïque DSSC étant **caractérisé en ce qu'**il comprend en outre :

- des moyens de dérivation intégrés sur lesdits substrats, lesdits moyens de dérivation comprenant une diode de dérivation (5, 5') pour ladite au moins une cellule photoélectrochimique (4), ladite diode de dérivation (5) étant disposée sur une partie de surface latérale du dispositif photovoltaïque, dans lequel ladite surface latérale du dispositif photovoltaïque est définie par au moins deux parties, une partie de surface latérale dudit premier substrat (9) et une partie de surface latérale dudit second substrat (10), et par un matériau d'encapsulation (41) constitué d'un matériau isolant de l'électricité, intercalé entre lesdites deux parties ;
- deux pistes conductrices (6, 7) connectant l'anode et la cathode de ladite diode de dérivation (5, 5') à l'électrode négative et à l'électrode positive de ladite cellule, respectivement, et
- des moyens de filtration UV pour filtrer au moins en partie un rayonnement UV, appliqués sur au moins une face (2, 22, 3, 33) desdits substrats (9, 10) au moins en correspondance avec ladite au moins une cellule.

2. Dispositif photovoltaïque DSSC selon la revendication 1, **caractérisé en ce qu'**il comprend une pluralité de cellules photoélectrochimiques (4) connectées en série et lesdits moyens de dérivation comprennent une diode de dérivation (5, 5') pour chacune desdites cellules photoélectrochimiques (4).

3. Dispositif photovoltaïque DSSC selon la revendication 1, **caractérisé en ce qu'**il comprend une pluralité de cellules photoélectrochimiques (4) connectées en série et lesdits moyens de dérivation comprennent une diode de dérivation (5, 5') pour deux ou plus desdites cellules photoélectrochimiques (4) qui a l'anode connectée à l'électrode négative de la première desdites deux ou plus de cellules photoélectrochimiques (4) et la cathode connectée à l'électrode positive de la dernière desdites deux ou plus desdites cellules photoélectrochimiques (4).

4. Dispositif photovoltaïque DSSC selon l'une quelconque des revendications précédentes, **caractérisé en ce qu'**il comprend, pour chaque diode de dérivation (5, 5'), une seconde diode de dérivation (5', 5) située sur le bord du dispositif photovoltaïque opposé à celui où ladite diode de dérivation (5, 5') est située.

5. Dispositif photovoltaïque DSSC selon l'une quelconque des revendications précédentes, **caractérisé en ce qu'**au moins une surface latérale de terre est prévue sur ledit au moins un substrat (9, 10) et lesdits moyens de dérivation sont agencés sur ladite surface latérale de terre.

6. Dispositif photovoltaïque DSSC selon l'une quelconque des revendications 1 à 4, **caractérisé en ce qu'**il est prévu un ou plusieurs boîtiers sur au moins l'un desdits substrats (9, 10) pour recevoir un nombre correspondant de diodes de dérivation (5, 5').

7. Dispositif photovoltaïque DSSC selon l'une quelconque des revendications précédentes, **caractérisé en ce que** chaque diode de dérivation (5, 5') est une diode de Schottky.

8. Dispositif photovoltaïque DSSC selon l'une quelconque des revendications 1 à 7, **caractérisé en ce que** les pistes conductrices (6, 7) sont aménagées en utilisant de la colle ou des résines conductrices.

9. Dispositif photovoltaïque DSSC selon l'une quelconque des revendications 1 à 7, **caractérisé en ce que** les pistes conductrices (6, 7) sont aménagées par des rubans métalliques conducteurs.

10. Dispositif photovoltaïque DSSC selon l'une quelconque des revendications 8 à 9, **caractérisé en ce que** des rubans métalliques (13) sont en outre appliqués sur lesdites pistes conductrices (6, 7).

11. Dispositif photovoltaïque DSSC selon l'une quelconque des revendications précédentes, **caractérisé**

en ce que lesdits moyens de filtration sont un rayonnement de filtre UV ou une partie du spectre solaire avec une longueur d'onde inférieure à une valeur de seuil dans une plage entre 390 nm et 410 nm.

12. Dispositif photovoltaïque DSSC selon l'une quelconque des revendications précédentes, **caractérisé en ce que** lesdits moyens de filtration sont appliqués sur toute la surface d'au moins une face du substrat exposée au soleil et/ou sur toute surface d'au moins une face (2, 22, 3, 33) du substrat (9, 10) exposée au soleil.

13. Dispositif photovoltaïque DSSC selon l'une quelconque des revendications précédentes, **caractérisé en ce que** lesdits moyens de filtration sont appliqués sur toute la surface d'au moins une face du substrat exposée au soleil et/ou sur toute surface d'au moins une face (2, 22, 3, 33) du substrat (9, 10) non exposée au soleil.

14. Dispositif photovoltaïque DSSC selon l'une quelconque des revendications précédentes, **caractérisé en ce que** lesdits moyens de filtration comprennent un filtre UV (11) constitué d'une feuille ou d'une plaque de matériau polymère.

15. Dispositif photovoltaïque DSSC selon la revendication précédente, **caractérisé en ce que** ledit filtre UV (11) est constitué de polyester ou de polycarbonate ou de polyvinyle.

16. Dispositif photovoltaïque DSSC selon l'une quelconque des revendications 1 à 13, **caractérisé en ce que** lesdits moyens de filtration sont constitués d'un film ou d'une couche de revêtement.

17. Dispositif photovoltaïque DSSC selon l'une quelconque des revendications 1 à 13, **caractérisé en ce que** lesdits moyens de filtration sont constitués d'au moins l'un desdits substrats.

18. Dispositif photovoltaïque DSSC selon l'une quelconque des revendications précédentes, **caractérisé en ce qu'**au moins une cellule photoélectrochimique peut comprendre une pluralité de cellules connectées l'une à l'autre en parallèle.

**Fig.2**

**Fig.1**

Fig.3

Fig.4

EP 2 652 758 B1

*Fig5*

*Fig6*

EP 2 652 758 B1

**Fig.7**

**Fig.8**

EP 2 652 758 B1

Fig.9

Fig.11

Fig.10

18

*Fig.12*

*Fig.13*

Fig.14

Fig.15

**Fig.16**

**Fig.17**

**Fig.18**

**Fig.19**

**Fig.20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6291761 B1

- EP 1065141 A2

**Non-patent literature cited in the description**

- *Sol. Ener. Mater. Sol. Cells,* 2001, vol. 70, 203-212